(19) **Europäisches Patentamt**

**European Patent Office**

**Office européen des brevets**

(11) **EP 0 990 816 B1**

(12) **EUROPEAN PATENT SPECIFICATION**

(45) Date of publication and mention
of the grant of the patent:
**21.04.2004 Bulletin 2004/17**

(51) Int Cl.[7]: **F16F 9/00**

(21) Application number: **99119360.8**

(22) Date of filing: **29.09.1999**

(54) **Vibration damping composition**

Schwingungsdämpfende Zusammensetzung

Composition amortissante les vibrations

(84) Designated Contracting States:
**DE FR GB IT**

(30) Priority: **30.09.1998 JP 27853798**

(43) Date of publication of application:
**05.04.2000 Bulletin 2000/14**

(73) Proprietor: **Dow Corning Toray Silicone
Company, Ltd.
Chiyoda-ku, Tokyo 100-0005 (JP)**

(72) Inventors:
• **Teishi, Mari Ta,
Dow Corning Toray Silicone Comp.
Ichihara-shi, Chiba Prefecture (JP)**
• **Akamatsu, Shoji,
Dow Corning Toray Silicone Comp.
Ichihara-shi, Chiba Prefecture (JP)**

(74) Representative: **Spott, Gottfried, Dr.
Spott & Weinmiller
Patentanwälte
Sendlinger-Tor-Platz 11
80336 München (DE)**

(56) References cited:
**EP-A- 0 677 574       DE-A- 2 115 123
DE-A- 2 302 657       DE-A- 3 207 654
DE-A- 3 234 469**

• **PATENT ABSTRACTS OF JAPAN vol. 1998, no.
14, 31 December 1998 (1998-12-31) & JP 10
251517 A (TORAY DOW CORNING SILICONE CO
LTD), 22 September 1998 (1998-09-22) -&
DATABASE CHEMABS [Online] CHEMICAL
ABSTRACTS SERVICE, COLUMBUS, OHIO, US
STN, CAPLUS accession no. 1998:613797,
XP002126988**

**Description**

**FIELD OF THE INVENTION**

The present invention relates to a vibration damping composition comprising a viscous liquid and solid powders. More particularly, this invention relates to a vibration damping composition possessing stable vibration damping characteristics which are not significantly affected by temperature changes.

**BACKGROUND OF THE INVENTION**

Vibration damping compositions containing viscous liquids and solid powders have been disclosed. For example, in Japanese Patent Publication No. 62113932 is disclosed a vibration damping composition containing water, liquid polymers such as diethylene glycol, glycerin, or polybutadiene, and clay mineral powders. In Japanese Patent Publication No. 63308241 is disclosed vibration damping compositions containing viscous liquids, such as silicone oil, and solid powders, such as silica powder, glass powder, and silicone resin powder. In Japanese Patent Publication No. 63308242 are disclosed vibration damping compositions containing viscous liquids, such as silicone oil, and powders of organic resins whose glass transition point is within the working temperature range, such as acrylic resins.

In addition, in Japanese Patent Publication No. 10251517 a vibration damping composition possessing excellent vibration characteristics even if the frequency of vibration changes was disclosed by the authors of the present invention. The vibration damping effects of these vibration damping compositions, however, varied depending on temperature changes, and they did not possess stable vibration damping characteristics.

The present invention relates to a vibration damping composition comprising (A) 95-25 wt% of a viscous liquid and (B) 5-75 wt% of at least two solid powders having different average particle diameters, wherein the difference between the respective average particle diameters of the solid powders is at least 10 $\mu$m, see JP-A-10-251 517.

The present invention is defined by a vibration damping composition comprising (A) 95-25 wt% of a viscous liquid and (B) 5-75 wt% of at least two solid powders having different average particle diameters, wherein the difference between the respective average particle diameters of the solid powders is at least 10 $\mu$m and only one of the solid powders is of calcium carbonate.

It is an object of the present invention to provide a vibration damping composition superior in vibration damping properties and possessing a stable vibration damping characteristic that is not significantly affected by temperature changes.

In the composition of this invention, Component (A), the viscous liquid is a medium used for dispersing the solid powders, Component (B). The viscous liquid (A) is exemplified by mineral oil, vegetable oil, synthetic oil, and silicone oil. Preferably the viscous liquid is a silicone oil because of its high compressibility, weak dependence of changes in viscosity on temperature, and superior heat resistance. Organopolysiloxanes having a siloxane backbone are recommended as the silicone oil, with the organopolysiloxane preferably containing groups exemplified by alkyl groups such as methyl, ethyl and propyl, alkenyl groups such as vinyl and butenyl, aryl groups, such as phenyl and tolyl, halogenated alkyl groups such as 3,3,3-trifluoropropyl, and other substituted or unsubstituted monovalent hydrocarbon groups, and, additionally, a small amount of hydroxyl groups, methoxy groups, ethoxy groups, or other alkoxy groups as the groups bonded to the silicon atom in such siloxanes. Among them, in terms of the weak dependence of changes in viscosity on temperature and the excellent storage stability of the composition of the present invention, alkyl groups are preferable, with the methyl group being particularly preferred. Also, the molecular structures of such silicone oils are exemplified by linear, partially branched linear, branched, and cyclic structures, with the linear structure being particularly preferred. The kinematic viscosity of such silicone oils at 25°C is, preferably, within the range of from 100 $mm^2$/s to 1,000,000 $mm^2$/s, with the range of from 500 $mm^2$/s to 500,000 $mm^2$/s being even more preferable. This is due to the fact that if the kinematic viscosity at 25°C is less than 100 $mm^2$/s, maintaining the solid powders in a dispersed state tends to become impossible, and, on the other hand, if it exceeds 1,000,000 $mm^2$/s, the handling properties deteriorate, and it becomes more difficult to disperse the solid powders. Preferred silicone oils as Component (A) are exemplified by trimethylsiloxy-endblocked polydimethylsiloxanes and trimethylsiloxy-endblocked polydimethylsiloxane-polymethylphenylsiloxane copolymers. The content of the viscous fluid, Component (A) in the compositions of this invention, is typically from 95 wt% to 25 wt%, preferably from 91 wt% to 30 wt%, and, more preferably from 80 wt% to 30 wt%. This is due to the fact that if the amount of the added viscous fluid is not within this range, the vibration damping characteristics of the compositions of this invention tends to deteriorate.

The solid powder, Component (B), used in the compositions of this invention, which is a component intended for imparting vibration damping properties to the composition of the present invention, is a mixture of two or more solid powders with different average particle diameters. It is necessary that the difference in the particle diameters, based on the average particle diameter, of those two or more solid powders should be at least 10 $\mu$m, with 15 $\mu$m or more being preferable. The average particle diameters of the solid powders are usually within the range of from 1 $\mu$m to 200

µm, and, preferably, within the range of from 10 µm to 150 µm, with a mixture of (B1) a solid powder with an average particle diameter of 1 µm to 50 µm and (B2) a solid powder with an average particle diameter of 20 µm to 200 µm being particularly preferred as the solid powder of the present invention. The solid powders are exemplified by inorganic powders such as silica powder, calcium carbonate powder, and glass powder, organic resin powders such as polyethylene resin powder and acrylic resin powder, and silicone resin powder. As for their shape, spherical, oblate, and irregular shape are suggested. A combination of a calcium carbonate powder with an average particle diameter of about 10-30 µm and a glass powder with an average particle diameter of about 70-120 µm being especially preferred. The content of the solid powders in the composition of the present invention is within the range of from 5 wt% to 75 wt%, preferably, within the range of from 9 wt% to 70 wt%, and, more preferably, within the range of from 20 wt% to 70 wt%. This is due to the fact that if the amount of the added solid powders is not within this range, the vibration damping characteristic tends to deteriorate. In addition, the proportion, in which the above mentioned solid powder of component (B1) and solid powder of component (B2) are mixed, is, preferably, such that component (B2) constitutes not more than 40 w% of component (B1).

The composition of the present invention comprises the above mentioned viscous liquid (A) and solid powders (B), but other optional components, such as clay, bentonite, silica micropowder, metallic soap, and other thickeners, anti-oxidants, rust preventives, flame resistance imparting agents, pigments, and dyes, may be added thereto as well.

The composition of the present invention is produced by homogeneously mixing the above mentioned viscous liquid (A) and solid powders (B). Kneading techniques employing well-known kneading equipment, such as ball mills, vibrating mills, kneader-mixers, screw extruders, paddle mixers, ribbon mixers, Henschel mixers, jet mixers, Hobart mixers, roller mixers, and the like, are suggested as the means for mixing the viscous liquid (A) and solid powders (B).

The composition of the present invention as described above is superior in vibration damping properties and has the advantage of insignificant temperature dependency, which results in an excellent vibration damping characteristic even if the temperature fluctuates. For this reason, by placing it in containers made of elastic material to obtain shock-absorbing members, the vibration damping composition of the present invention can be utilized in shock-absorbing members used in electrical equipment, such as compact disc players, compact disc changers, minidisc players, and car navigation devices.

## EXAMPLES

In the examples hereinbelow, the kinematic viscosity is a value measured at 25°C.

Example 1

About 1000 g of a trimethylsiloxy-endblocked polydimethylsiloxane having a kinematic viscosity of 60,000 mm$^2$/s, 1620 g of irregular-shaped calcium carbonate with an average particle diameter of 20 µm, and 360 g of spherical glass beads with an average particle diameter of 80-110 µm were placed in a Hobart mixer (made by Hobart) and mixed at a low speed for one hour, with scraping carried out every 30 minutes. The vibration damping characteristics (tan$\delta$) of the thus obtained vibration damping composition at -20°C, 25°C, and 60°C were measured by the plate method using a rheometric dynamic analyzer (from RHEOMETRICS Inc.; RDA-700) (measurement conditions: plate diameter: 20 mm, frequency: 10 Hz, strain: 20%, sample thickness: 1 mm). Subsequently, ratios to tan$\delta$ at 25°C (tan$\delta$/tan$\delta$(25°C)) were obtained from these results. The results are listed in Table 1.

Example 2

Except for adding spherical glass beads with an average particle diameter of 40-80 µm instead of the spherical glass beads with an average particle diameter of 80-110 µm used in Example 1, a vibration damping composition was prepared in the same manner as in Example 1. The tan$\delta$ of the resultant vibration damping composition at -20°C, 25°C, and 60°C were measured in the same manner as in Example 1, obtaining ratios to tan$\delta$ at 25°C from these results. The results are listed in Table 1.

Example 3

Except for adding a trimethylsiloxy-endblocked polydimethylsiloxane having a kinematic viscosity of 100,000 mm$^2$/s instead of the trimethylsiloxy-endblocked polydimethylsiloxane having a kinematic viscosity of 60,000 mm$^2$/s used in Example 1, a vibration damping composition was prepared in the same manner as in Example 1. The tan$\delta$ of the resultant vibration damping composition at -20°C, 25°C, and 60°C were measured in the same manner as in Example 1, obtaining ratios to tan$\delta$ at 25°C from these results. The results are listed in Table 1.

Comparative Example 1

A vibration damping composition was prepared in the same manner as in Example 1, except that the spherical glass beads used in Example 1 were not added. The tanδ of the resultant vibration damping composition at -20°C, 25°C, and 60°C were measured in the same manner as in Example 1, obtaining ratios to tanδ at 25°C from these results. The results are listed in Table 1.

Comparative Example 2

A vibration damping composition was prepared in the same manner as in Example 1, with the exception that spherical glass beads with an average particle diameter of 15 μm were added instead of the spherical glass beads with an average particle diameter of 80-110 μm used in Example 1. The tanδ of the resultant vibration damping composition at -20°C, 25°C, and 60°C were measured in the same manner as in Example 1, obtaining ratios to tanδ at 25°C from these results. The results are listed in Table 1.

Table 1

|  | Vibration Damping Characteristic (tanδ) at 25°C | Vibration Damping Characteristic [tanδ/tanδ(25°C)] | |
| --- | --- | --- | --- |
|  |  | -20°C | 60°C |
| Application Example 1 | 3.90 | 0.52 | 1.50 |
| Application Example 2 | 9.10 | 0.40 | 1.67 |
| Application Example 3 | 3.09 | 0.62 | 1.56 |
| Comparative Example 1 | 15.8 | 0.37 | 1.70 |
| Comparative Example 2 | 12.9 | 0.38 | 1.77 |

It can be seen from Table 1 that the compositions of this invention possess superior vibration damping properties and a stable vibration damping characteristic that is not significantly affected by temperature changes.

**Claims**

1. A vibration damping composition comprising:

   (A) 95-25 wt% of a viscous liquid; and
   (B) 5-75 wt% of at least two different solid powders having different average particle diameters wherein the difference between the respective average particle diameters of the solid powders is at least 10 μm **characterised in that** only one of the solid powders is of calcium carbonate.

2. A composition according to Claim 1, wherein (A) is selected from the group consisting of mineral oil, vegetable oil, synthetic oil, and silicone oil.

3. A composition according to Claim 2, wherein the silicone oil has a kinematic viscosity of from 100 mm$^2$/s to 1,000,000 mm$^2$/s at 25°C, preferably of from 500 mm$^2$/s to 500,000 mm$^2$/s at 25°C.

4. A composition according to Claim 2, wherein the silicone oil is selected from the group consisting of trimethylsiloxy-endblocked polydimethylsiloxanes having a kinematic viscosity of from 100 mm$^2$/s to 1,000,000 mm$^2$/s at 25°C and trimethylsiloxy-endblocked polydimethylsiloxane-polymethylphenylsiloxane copolymers having a kinematic viscosity of from 100 mm$^2$/s to 1,000,000 mm$^2$/s at 25°C.

5. A composition according to Claim 2, wherein the silicone oil is selected from the group consisting of trimethylsiloxy-endblocked polydimethylsiloxanes having a kinematic viscosity of from 500 mm$^2$/s to 500,000 mm$^2$/s at 25°C and trimethylsiloxy-endblocked polydimethylsiloxane-polymethylphenylsiloxane copolymers having a kinematic viscosity of from 500 mm$^2$/s to 500,000 mm$^2$/s at 25°C.

**6.** A composition according to Claim 1 or 5, wherein the difference between the respective average particle diameters of the solid powders is at least 15 µm.

**7.** A composition according to Claim 1 or 5, wherein the average particle diameters of the solid powders are from 1 µm to 200 µm.

**8.** A composition according to Claim 1 or 5, wherein the average particle diameters of the solid powders are from 10 µm to 150 µm.

**9.** A composition according to Claim 1 or 5, wherein Component (B) is a mixture of (B1) a solid calcium carbonate powder with an average particle diameter of 1 µm to 50 µm and (B2) a solid powder with an average particle diameter of 20 µm to 200 µm.

**10.** A composition according to Claim 9, wherein (B2) the other of said solid powders is selected from the group consisting of inorganic powders, organic resin powders, and silicone resin powders.

**11.** A composition according to Claim 10, wherein in organic powder is selected from the group consisting of silica powder and glass powder, and the organic resin powder is selected from the group consisting of polyethylene resin powder and acrylic resin powder.

**12.** A composition according to Claim 1 or 5, wherein (B) is a combination of (B1) a calcium carbonate powder with an average particle diameter of about 10-30 µm and (B2) a glass powder with an average particle diameter of about 70-120 µm.

**13.** A composition according to Claim 11, wherein (B) is present in an amount of from 20 wt% to 70 wt% and (B2) constitutes not more than 40 w% of component (B1).

**14.** A composition according to Claim 1, wherein the composition further comprises at least one ingredient selected from the group consisting of clay, bentonite, silica micropowder, metallic soap, thickeners, antioxidants, rust preventives, flame resistance imparting agents, pigments, and dyes.

**Patentansprüche**

**1.** Schwingungsdämpfungszusammensetzung, die die folgenden Bestandteile umfasst:

(A) 95 bis 25 Gew.-% einer viskosen Flüssigkeit und
(B) 5 bis 75 Gew.-% von mindestens zwei festen Pulvern mit unterschiedlichen mittleren Teilchendurchmessern, wobei der Unterschied zwischen den jeweiligen mittleren Teilchendurchmessern der festen Pulver mindestens 10 µm beträgt,

**dadurch gekennzeichnet, dass** lediglich eines der festen Pulver aus Calciumcarbonat besteht.

**2.** Zusammensetzung nach Anspruch 1, wobei (A) aus der Gruppe ausgewählt ist, die aus Mineralöl, pflanzlichem Öl, synthetischem Öl und Siliconöl besteht.

**3.** Zusammensetzung nach Anspruch 2, wobei das Siliconöl eine kinematische Viskosität von 100 $mm^2$/s bis 1.000.000 $mm^2$/s bei 25°C, vorzugsweise eine kinematische Viskosität von 500 $mm^2$/s bis 500.000 $mm^2$/s bei 25°C, aufweist.

**4.** Zusammensetzung nach Anspruch 2, wobei das Siliconöl aus der Gruppe ausgewählt ist, die aus Trimethylsiloxy-endblockierten Polydimethylsiloxanen mit einer kinematischen Viskosität von 100 $mm^2$/s bis 1.000.000 $mm^2$/s bei 25°C und Trimethylsiloxy-endblockierten Polydimethylsiloxan/Polymethylphenylsiloxan-Copolymeren mit einer kinematischen Viskosität von 100 $mm^2$/s bis 1.000.000 $mm^2$/s bei 25°C besteht.

**5.** Zusammensetzung nach Anspruch 2, wobei das Siliconöl aus der Gruppe ausgewählt ist, die aus Trimethylsiloxy-endblockierten Polydimethylsiloxanen mit einer kinematischen Viskosität von 500 $mm^2$/s bis 500.000 $mm^2$/s bei 25°C und Trimethylsiloxy-endblockierten Polydimethylsiloxan/Polymethylphenylsiloxan-Copolymeren mit einer ki-

nematischen Viskosität von 500 mm$^2$/s bis 500.000 mm$^2$/s bei 25°C besteht.

6. Zusammensetzung nach Anspruch 1 oder 5, wobei die Differenz zwischen den jeweiligen mittleren Teilchendurchmessem der festen Pulver mindestens 15 μm beträgt.

7. Zusammensetzung nach Anspruch 1 oder 5, wobei die durchschnittlichen Teilchendurchmesser der festen Pulver 1 μm bis 200 μm betragen.

8. Zusammensetzung nach Anspruch 1 oder 5, wobei die mittleren Teilchendurchmesser der festen Pulver 10 μm bis 150 μm betragen.

9. Zusammensetzung nach Anspruch 1 oder 5, wobei die Komponente (B) ein Gemisch aus (B1) einem festen Calciumcarbonatpulver mit einem mittleren Teilchendurchmesser von 1 μm bis 50 μm und (B2) einem festen Pulver mit einem mittleren Teilchendurchmesser von 20 μm bis 200 μm ist.

10. Zusammensetzung nach Anspruch 9, wobei (B2) das andere der festen Pulver aus der Gruppe ausgewählt ist, die aus anorganischen Pulvern, organischen Harzpulvem und Siliconharzpulvem besteht.

11. Zusammensetzung nach Anspruch 10, wobei das organische Pulver aus der Gruppe ausgewählt ist, die aus Siliciumdioxidpulver und Glaspulver besteht und das organische Harzpulver aus der Gruppe ausgewählt ist, die aus Polyethylenharzpulver und Acrylharzpulver besteht.

12. Zusammensetzung nach Anspruch 1 oder 5, wobei (B) eine Kombination aus (B1) einem Calciumcarbonatpulver mit einem mittleren Teilchendurchmesser von etwa 10 bis 30 μm und (B2) einem Glaspulver mit einem durchschnittlichen Teilchendurchmesser von etwa 70 bis 120 μm ist.

13. Zusammensetzung nach Anspruch 11, wobei (B) in einer Menge von 20 Gew.-% bis 70 Gew.-% vorhanden ist und (B2) nicht mehr als 40 Gew.-% der Komponente (B1) ausmacht.

14. Zusammensetzung nach Anspruch 1, wobei die Zusammensetzung ferner mindestens einen Bestandteil umfasst, der aus der Gruppe ausgewählt ist, die aus Ton, Bentonit, Siliciumdioxidmikropulver, Metallseife, Verdickungsmitteln, Antioxidationsmitteln, Rostverhinderungsmitteln, eine Flammbeständigkeit verleihenden Mitteln, Pigmenten und Farbstoffen besteht.

**Revendications**

1. Composition amortissant les vibrations, comprenant :

   (A) 25 à 95% en poids d'un liquide visqueux ; et
   (B) 5 à 75% en poids d'au moins deux poudres solides possédant des diamètres de particules moyens différents, dans laquelle la différence entre les diamètres de particules moyens respectifs des poudres solides est d'au moins 10 μm, **caractérisée en ce que** seule l'une des poudres solides est du carbonate de calcium.

2. Composition selon la revendication 1, dans laquelle (A) est choisi parmi le groupe comprenant de l'huile minérale, de l'huile végétale, de l'huile synthétique et de l'huile de silicone.

3. Composition selon la revendication 2, dans laquelle l'huile de silicone possède une viscosité cinématique de 100 mm$^2$/s à 1000000 mm$^2$/s à 25°C, de préférence.

4. Composition selon la revendication 2, dans laquelle l'huile de silicone est choisie parmi le groupe comprenant des polydiméthylsiloxanes bloqués à l'extrémité par du triméthylsiloxy possédant une viscosité cinématique de 100 mm$^2$/s à 1000000 mm$^2$/s à 25°C, et des copolymères de polydiméthylsiloxane-polyméthylphénylsiloxane bloqués à l'extrémité par du triméthylsiloxy possédant une viscosité cinématique de 100 mm$^2$/s à 1000000 mm$^2$/s à 25°C.

5. Composition selon la revendication 2, dans laquelle l'huile de silicone est choisie parmi le groupe comprenant des polydiméthylsiloxanes bloqués à l'extrémité par du triméthylsiloxy possédant une viscosité cinématique de 500 mm$^2$/s à 500000 mm$^2$/s à 25°C, et des copolymères de polydiméthylsiloxane-polyméthylphénylsiloxane bloqués à l'extrémité par du triméthylsiloxy possédant une viscosité cinématique de 500 mm$^2$/s à 500000 mm$^2$/s à 25°C.

6. Composition selon la revendication 1 ou 5, dans laquelle la différence entre les diamètres de particules moyens respectifs des poudres solides est d'au moins 15 µm.

7. Composition selon la revendication 1 ou 5, dans laquelle les diamètres de particules moyens des poudres solides sont de 1 µm à 200 µm.

8. Composition selon la revendication 1 ou 5, dans laquelle les diamètres de particules moyens des poudres solides sont de 10 µm à 150 µm.

9. Composition selon la revendication 1 ou 5, dans laquelle le composant (B) est un mélange (B1) d'une poudre solide de carbonate de calcium possédant un diamètre de particules moyen de 1 µm à 50 µm et (B2) d'une poudre solide possédant un diamètre de particules moyen de 20 µm à 200 µm.

10. Composition selon la revendication 9, dans laquelle l'autre desdites poudres solides (B2) est choisie parmi le groupe comprenant des poudres inorganiques, des poudres de résine organiques, et des poudres de résine de silicone.

11. Composition selon la revendication 10, dans laquelle la poudre de résine organique est choisie parmi le groupe comprenant de la poudre de résine polyéthylène et de la poudre de résine acrylique.

12. Composition selon la revendication 1 ou 5, dans laquelle (B) est une combinaison (B1) d'une poudre de carbonate de calcium possédant un diamètre de particules moyen d'environ 10 à 30 µm et (B2) d'une poudre de verre possédant un diamètre de particules moyen d'environ 70 à 120 µm.

13. Composition selon la revendication 11, dans laquelle (B) est présent dans une quantité de 20 à 70% en poids et (B2) constitue moins de 40% en poids du composant (B1).

14. Composition selon la revendication 1, dans laquelle la composition comprend en outre au moins un ingrédient choisi parmi le groupe comprenant de l'argile, de la bentonite, de la micro-poudre de silice, un savon métallique, des épaississants, des antioxydants, des antirouilles, des agents résistants aux flammes, des pigments et des colorants.